# EUROPÄISCHE PATENTANMELDUNG

(11) **EP 2 409 748 A1**
(43) Veröffentlichungstag der Anmeldung: **25.01.2012**
(21) Anmeldenummer: 10170310.6
(22) Anmeldetag: 21.07.2010
(51) Int. Cl.: B01D 19/02, B05B 3/04

(54) **Vorrichtung und Verfahren zur Entgasung von Flotationsschaum, sowie Flotationsanlage**

(71) Anmelder: SIEMENS AKTIENGESELLSCHAFT, 80333 München (DE)
(72) Erfinder: Kummer, Dominik, 85435, Erding (DE)

(57) **Zusammenfassung**

Die Erfindung betrifft eine Vorrichtung zur Entgasung von Flotationsschaum, umfassend eine rotierbare Einheit und ein Zulaufrohr für eine Flüssigkeit, das an einem ersten Ende in die um eine Längsachse L des Zulaufrohrs rotierbare Einheit mündet. Die rotierbare Einheit umfasst eine Rohrverzweigung, die t-förmig ausgebildet ist und in zwei Rohrarme mündet, wobei sich jeweils ein Rohrbogen mit einer Austrittsöffnung für die Flüssigkeit an einen der Rohrarme anschließt. Die Austrittsöffnungen befinden sich jeweils an einem dem jeweiligen Rohrarm abgewandten Rohrbogenende des Rohrbogens, wobei die Rohrbogenenden derart in entgegengesetzte Richtungen zeigen, dass beim Ausströmen der Flüssigkeit aus den Austrittsöffnungen auf die rotierbare Rohrverzweigung ein Drehmoment um die Längsachse L des Zulaufrohrs wirkt. Die Vorrichtung umfasst weiterhin ein mit der rotierbaren Einheit verbundenes Rührwerkzeug und mindestens einen Schwimmkörper.

## Beschreibung

Die Erfindung betrifft eine Vorrichtung zur Entgasung von Flotationsschaum. Die Erfindung betrifft weiterhin eine Flotationsanlage mit einer derartigen Vorrichtung sowie ein Verfahren zur Entgasung von Flotationsschaum.

Unterschiedliche Methoden zur Zerstörung von Schaum sind bereits bekannt. Neben der Möglichkeit einer chemischen und thermischen Schaumzerstörung wird Schaum vor allem mechanisch zerstört. Dabei kommen unter anderem rotierende Einbauten, Zyklone, Zentrifugen, Ultraschallbehandlungsanlagen, Schaumsirenen usw. zum Einsatz. Auch ein Besprühen oder Beregnen des Schaums mit Flüssigkeit zählt zu den Methoden der mechanischen Schaumzerstörung und stellt mitunter die wichtigste der Methoden dar.

So beschreibt die DE 202 04 981 U1 eine Vorrichtung zur Abtrennung von Luft aus Flotationsschaum, welche einen angetriebenen Rotor enthält, der eine Welle aufweist, auf deren Umfang sich mindestens ein Rotorflügel befindet. Der Rotor ist im Bereich des Rotorflügels von einer nicht rotierenden Wand umgeben. Der Flotationsschaum wird hier mechanisch zwischen Rotor und Wand zerschlagen.

Die DE 40 09 042 A1 offenbart einen mechanischen Schaumzerstörer mit einem Rotor, der ein Laufrad aufweist, das mit einer radialen Beschaufelung versehen ist.

Die DE 10 2008 030 531 A1 beschreibt eine Vorrichtung zur Entfernung von Gas, insbesondere Luft, aus Flotationsschaum. Zur Entgasung dient z.B. eine rotationssymmetrische Kammer, innerhalb der ein Rotor angeordnet ist. Dieser ist in der Lage, den zufließenden Flotationsschaum in Rotation zu versetzten und enthaltenes Gas abzutrennen.

Die pneumatische Flotation ist ein physikalisches Trennverfahren zur Trennung feinkörniger Feststoffgemenge, wie beispielsweise von Erzen und Gangart, in einer wässrigen Aufschlämmung bzw. Suspension mit Hilfe von Gasbläschen aufgrund einer unterschiedlichen Oberflächenbenetzbarkeit der in der Suspension enthaltenen Partikel. Sie wird zur Aufbereitung von Bodenschätzen und bei der Verarbeitung von vorzugsweise mineralischen Stoffen mit einem niedrigen bis mittleren Gehalt an einer Nutzkomponente bzw. eines Wertstoffs verwendet, beispielsweise in Form von Nichteisenmetallen, Eisen, Metallen der seltenen Erden und/oder Edelmetallen sowie nichtmetallischen Bodenschätzen.

Die WO 2006/069995 A1 beschreibt eine pneumatische Flotationszelle mit einem Gehäuse, das eine Flotationskammer umfasst, mit mindestens einer Düsenanordnung, hier als Ejektoren bezeichnet, weiterhin mit mindestens einer Begasungseinrichtung, bei Verwendung von Luft Belüftungseinrichtungen oder Aeratoren genannt, sowie einem Sammelbehälter für ein bei der Flotation gebildetes Schaumprodukt.

Bei der pneumatischen Flotation wird generell eine mit Reagenzien versetzte Suspension aus Wasser und feinkörnigem Feststoff über mindestens eine Düsenanordnung in eine Flotationskammer eingebracht. Die Reagenzien sollen bewirken, dass insbesondere die wertvollen, bevorzugt abzutrennenden Partikel bzw. Wertstoffpartikel in der Suspension hydrophob ausgebildet werden. Meist werden als Reagentien Xanthate eingesetzt, insbesondere um sulfidische Erzpartikel selektiv zu hydrophobisieren. Gleichzeitig mit der Suspension wird der mindestens einen Düsenanordnung Gas, insbesondere Luft, zugeführt, das mit den hydrophoben Partikeln in der Suspension in Berührung kommt. Die hydrophoben Partikel haften an sich bildenden Gasbläschen an, so dass die Gasbläschen-Gebilde, auch Aeroflocken genannt, aufschwimmen und an der Oberfläche der Suspension ein Schaumprodukt bilden. Das Schaumprodukt bzw. der Flotationsschaum wird in einen Sammelbehälter bzw. Konzentratbehälter ausgetragen und üblicherweise in späteren Prozessschritten noch eingedickt.

Die Qualität des Schaumprodukts bzw. der Trennerfolg des Verfahrens der Flotation ist unter anderem von der Kollisionswahrscheinlichkeit zwischen einem hydrophoben Partikel und einem Gasbläschen abhängig. Je höher die Kollisionswahrscheinlichkeit, desto größer ist die Anzahl an hydrophoben Partikeln, die an einem Gasbläschen anhaften, an die Oberfläche aufsteigen und zusammen mit den Partikeln den Flotationsschaum bilden.

Über Schläuche oder Rohre gelangt der Flotationsschaum in den tiefer gelegenen Konzentratbehälter, von wo er durch eine Pumpeinrichtung abtransportiert werden kann. Allerdings ist der Flotationsschaum in seiner Austragsform nicht pumpbar. Der Flotationsschaum ist relativ fest und zerfällt nicht schnell genug von selbst, so dass er aktiv zerstört und mit Flüssigkeit verdünnt werden muss, damit er abgepumpt werden kann. Im Konzentratbehälter bilden sich zwei unterschiedliche Phasen:
Einerseits eine flüssige Phase, welche aus bereits zerfallenem Flotationsschaum und zugefügter Flüssigkeit besteht und weiterhin eine Schaumphase, die auf der flüssigen Phase aufschwimmt und die es noch aufzulösen gilt. Die in der flüssigen Phase enthaltenen Partikel weisen dabei ein starkes Absetzverhalten auf und lagern sich im Bereich des Behälterbodens des Konzentratbehälters an. Nachdem ein konstanter Level von Schaumphase und flüssiger Phase nicht eingestellt werden kann, gestaltet sich die Anbringung von Düsen zur Schaumzerstörung, wie auch die Installation eines Rührwerks, welches das Absetzen der Partikel verhindern soll, als schwierig. So wurden bisher im Konzentratbehälter Berieselungsdüsen oder -schläuche installiert, mit welchen der Flotationsschaum von oben oder von der Behälterwand aus mit Flüssigkeit besprüht wurde. Die eingedüste Flüssigkeit zerstört dabei den Flotationsschaum und verdünnt die flüssige Phase, so dass deren Pumpfähigkeit gewährleistet ist. Weiterhin sind konventionelle Rührwerke im Einsatz, um die Partikelanbackungen im Bereich des Behälterbodens zu verhindern. Ein solches Rührwerk ist üblicherweise motorbetrieben und kann fest am Konzentratbehälter installiert sein oder bei Bedarf in den Behälter abgesenkt werden. In beiden Fällen ist ein Fremdantrieb erforderlich, beispielsweise in Form eines Elektromotors oder Verbrennungsmotors, welcher einen Rührer des Rührwerks in Rotation versetzt. Eine Anpassung der Positionierung des Rührwerks innerhalb des Konzentratbehälters kann beispielsweise dadurch erfolgen, dass eine komplexe Regelung der Positionseinstellung dadurch erfolgt, dass ein Füllstand im Konzentratbehälter erfasst und eine entsprechende Positionierung der den Flotationsschaum zerstörenden Einrichtungen erfolgt.

Es ist Aufgabe der Erfindung, eine einfache und kostengünstig zu betreibende Vorrichtung zur Entgasung von Flotationsschaum bereitzustellen. Weiterhin soll eine damit ausgestattete Flotationsanlage sowie ein geeignetes Verfahren zur Entgasung von Flotationsschaum angegeben werden.

Die Aufgabe wird für die Vorrichtung zur Entgasung von Flotationsschaum dadurch gelöst, dass diese umfassend eine rotierbare Einheit und ein Zulaufrohr für eine Flüssigkeit ausgebildet ist, das an einem ersten Ende in die um eine Längsachse L des Zulaufrohrs rotierbare Einheit mündet, wobei die rotierbare Einheit eine Rohrverzweigung umfasst, die t-förmig ausgebildet ist und in zwei Rohrarme mündet, wobei sich jeweils ein Rohrbogen mit einer Austrittsöffnung für die Flüssigkeit an einen der Rohrarme anschließt, wobei sich die Austrittsöffnungen jeweils an einem dem jeweiligen Rohrarm abgewandten Rohrbogenende des Rohrbogens befinden, und wobei die Rohrbogenenden derart in entgegengesetzte Richtungen zeigen, dass beim Ausströmen der Flüssigkeit aus den Austrittsöffnungen auf die rotierbare Einheit ein Drehmoment um die Längsachse L des Zulaufrohrs wirkt, und dass die Vorrichtung weiterhin ein mit der rotierbaren Einheit verbundenes Rührwerkzeug und mindestens einen Schwimmkörper umfasst.

Die Maße der Vorrichtung sind an die Konzentratbehältergröße und -breite flexibel anpassbar, wobei auch die strömungstechnische Auslegung, d.h. die benötigte Flüssigkeitsmenge sowie die gewünschte Drehzahl der rotierbaren Einheit usw., eine Rolle spielen.

Die erfindungsgemäße Vorrichtung hat den Vorteil, dass ein Fremdantrieb nicht mehr erforderlich ist, um die rotierbare Einheit in Rotation zu versetzen. Die durch das Zulaufrohr zugeführte Flüssigkeit versetzt die rotierbare Einheit in Rotation um die Längsachse L des Zulaufrohrs, ohne dass ein zusätzlicher Fremdantrieb eingesetzt werden müsste. Dadurch kann Energie eingespart und die Betriebskosten reduziert werden. Die eingedüste Flüssigkeit würde sowieso zur Berieselung des Flotationsschaums eingesetzt, so dass auch diese im Vergleich zu herkömmlichen Verfahren keine zusätzlichen Kosten erzeugt. Aufgrund des mindestens einen Schwimmkörpers befindet sich die rotierbare Einheit zu jeder Zeit in der Schaumphase, nachdem der mindestens eine Schwimmkörper auf der flüssigen Phase aufschwimmt und je nach Füllstand an flüssiger Phase im Konzentratbehälter eine Auf- oder Abbewegung der erfindungsgemäßen Vorrichtung im Konzentratbehälter bewirkt. Eine zusätzliche Regeleinrichtung zur füllstandsabhängigen Positionseinstellung der erfindungsgemäßen Vorrichtung ist nicht mehr erforderlich. Das Rührwerkzeug ist mit der rotierbaren Einheit verbunden und wird mit dieser mitbewegt, sobald sich die rotierbare Einheit in Bewegung setzt.

Das Rührwerkzeug befindet sich dabei zu jeder Zeit in der flüssigen Phase und verhindert ein Absetzen von Partikeln im Bereich des Behälterbodens des Konzentratbehälters. Aufgrund der Anordnung der Austrittsöffnungen für die Flüssigkeit aus der erfindungsgemäßen Vorrichtung entsteht an den beiden Austrittsöffnungen eine Rückstosskraft, die ein Drehmoment um die Längsachse L des Zulaufrohrs ausübt und die rotierbare Einheit in Rotation versetzt. Aufgrund der Drehbewegung der rotierbaren Einheit wird durch die Rohrarme und die Rohrbögen Schaumphase zerschlagen und zusätzlich durch aus den Austrittsöffnungen austretende Flüssigkeit zerstört. Der Flüssigkeitseintrag führt weiterhin zur Verdünnung der flüssigen Phase, welche sich unterhalb der Schaumphase befindet, wodurch ein Abpumpen des Konzentratbehälters ermöglicht wird.

Als Rohrbögen werden bevorzugt herkömmliche 90°-Rohrbögen eingesetzt, es können aber auch anders abgewinkelte Rohrbögen eingesetzt werden. Als Materialien zur Bildung des Zulaufrohrs, der Rohrverzweigung, der Rohrarme und der Rohrbögen können Kunststoffmaterialien oder auch metallische Materialien eingesetzt werden.

Es hat sich bewährt, wenn die Rohrbögen in einer senkrecht zur Längsachse L des Zulaufrohrs ausgerichteten Ebene angeordnet sind. Dies minimiert den Platzbedarf für die rotierbare Einheit.

Weiterhin ist es von Vorteil, wenn auch die Rohrarme in der senkrecht zur Längsachse L des Zulaufrohrs ausgerichteten Ebene angeordnet sind. Eine derartige Ausgestaltung ermöglicht eine Anordnung der Austrittsöffnungen nahe dem Rührwerkzeug.

Bevorzugt weist das Zulaufrohr an einem dem ersten Ende abgewandten zweiten Ende eine Anschlusskupplung zur Verbindung mit einer Flüssigkeitsversorgungseinheit auf. Insbesondere wird hier eine Schnellkupplung eingesetzt, mittels welcher ein flexibler Schlauch zur Zuführung der Flüssigkeit mit dem Zulaufrohr verbunden werden kann. Nachdem die Flüssigkeit unter einem Druck von mindestens 4 bar zugeführt werden muss, damit die rotierbare Einheit die Rückstellkräfte überwindet und sich in Rotation R versetzt, sind entsprechend druckbeständige Materialien zur Bildung der Vorrichtung, der Anschlusskupplung und des Schlauchs erforderlich.

Der mindestens eine Schwimmkörper ist bevorzugt konzentrisch zur Längsachse des Zulaufrohrs an der Rohrverzweigung oder dem Zulaufrohr angeordnet. Alternativ können aber auch Schwimmkörper an den Rohrarmen und/oder Rohrbögen vorgesehen sein. Als Schwimmkörper eignen sich beispielsweise Schaumstoffkörper, luftbefüllte Kunststoffbehälter oder -schläuche, Luftkissen oder dergleichen.

In einer bevorzugten Ausführungsform ist das Rührwerkzeug t-förmig ausgebildet, um Strömungs- und Reibwiderstände zu minimieren. Das Rührwerkzeug umfasst dabei bevorzugt einen Trägerstab und mindestens zwei senkrecht zum Trägerstab ausgerichtete Rührarme, wobei der Trägerstab konzentrisch zur Längsachse L des Zulaufrohrs starr an der dem Zulaufrohr abgewandten Seite der Rohrverzweigung befestigt ist.

Um die Gefahr einer Kollision des Rührwerkzeugs mit benachbarten, unbewegten Bauteilen, wie beispielsweise einer Seitenwand eines Konzentratbehälters, zu minimieren, ist es von Vorteil, wenn das Rührwerkzeug in Richtung der Längsachse L des Zulaufrohrs gesehen eine maximale Breite aufweist, die dem Durchmesser der rotierbaren Einheit entspricht.

Das Rührwerkzeug kann alternativ oder zusätzlich mindestens zwei Rührschaufeln umfassen, die an den Rohrarmen und/oder den Rohrbögen und/oder den Rührarmen angeordnet sind, sofern die Strömungs- und Reibwiderstände dies zulassen und eine Rotation der rotierbaren Einheit weiterhin ermöglichen.

Es hat sich bewährt, wenn eine Halteeinrichtung mit dem Zulaufrohr verbunden ist, welche eine Bewegung des Zulaufrohrs in Richtung der Längsachse L des Zulaufrohrs ermöglicht.

Bei der Halteeinrichtung kann es sich um einen Kragarm handeln, der über dem Konzentratbehälter befestigt ist, wobei die Halteeinrichtung die erfindungsgemäße Vorrichtung in horizontaler Richtung fixiert und ihr gleichzeitig die Möglichkeit zu einer Bewegung in Richtung der Längsachse L des Zulaufrohrs ermöglicht. Dies bedeutet also, dass die Halteeinrichtung eine Auf- und Abbewegung der erfindungsgemäßen Vorrichtung in einem Konzentratbehälter zulässt. Steigt der Füllstand an flüssiger Phase in einem Konzentratbehälter an, so bewegt sich die rotierbare Einheit aufgrund des Auftriebs des mindestens einen Schwimmkörpers nach oben, d.h. vom Behälterboden des Konzentratbehälters weg. Sinkt dagegen der Füllstand an flüssiger Phase im Konzentratbehälter, so bewegt sich die mittels des mindestens einen Schwimmkörpers auf der Oberfläche der flüssigen Phase getragene rotierende Einheit nach unten in Richtung des Behälterbodens. Die Halteeinrichtung ermöglicht eine derartige automatische Veränderung der Position der erfindungsgemäßen Vorrichtung im Konzentratbehälter ohne den Eingriff eines Bedienpersonals, so dass die Austrittsöffnungen zu jeder Zeit in der Schaumphase angeordnet sind und die Effektivität der Schaumzerstörung beibehalten wird.

Es ist von Vorteil, am Zulaufrohr mindestens eine Düsenanordnung zum Eindüsen mindestens eines flüssigen und/oder gasförmigen Mediums in das Zulaufrohr anzuordnen, um der Flüssigkeit beispielsweise schaumbrechende Reagenzien zuzuführen, die eine Schaumzerstörung noch beschleunigen.

Die Aufgabe wird für die Flotationsanlage gelöst, indem diese umfassend mindestens eine Flotationszelle, mindestens eine Schaumaustragseinrichtung zum Austragen eines in der jeweiligen Flotationszelle gebildeten Flotationsschaums und mindestens einen Konzentratbehälter zur Aufnahme und Entgasung des ausgetragenen Flotationsschaums ausgebildet ist, wobei weiterhin jedem Konzentratbehälter eine erfindungsgemäße Vorrichtung zugeordnet ist, deren Zulaufrohr senkrecht in den Konzentratbehälter eingeführt ist, wobei das Rührwerkzeug in Richtung eines Behälterbodens des Konzentratbehälters zeigt.

Mittels der erfindungsgemäßen Flotationsanlage ist es möglich, den aus der Flotationszelle ausgetragenen Flotationsschaum in großen Mengen zu zerstören und effektiv abzupumpen. Aufgrund der selbsttätigen Regelung der Höhenpositionierung der rotierbaren Einheit im Konzentratbehälter und der Rotation der rotierbaren Einheit ohne Fremdantrieb ist die erfindungsgemäße Flotationsanlage mit geringem Personal- und Kosteneinsatz bei maximaler Ausbeute betreibbar.

In einer bevorzugten Ausführungsform ist eine Sicherungseinrichtung vorhanden, welche einen maximalen Bewegungsspielraum des Zulaufrohrs in Richtung der Längsachse L des Zulaufrohrs derart begrenzt, dass eine Kollision zwischen dem Behälterboden und dem Rührwerkzeug vermieden wird.

Insbesondere ist einem jeden Konzentratbehälter mindestens eine Pumpeinrichtung zugeordnet, mittels welcher eine flüssige Phase, aus dem Konzentratbehälter abpumpbar ist. Als Pumpeinrichtung eignet sich hierbei insbesondere eine konventionelle Kreiselpumpe.

Die Aufgabe wird weiterhin durch ein Verfahren zum Entgasen von Flotationsschaum mittels einer erfindungsgemäßen Flotationsanlage gelöst, das folgende Schritte umfasst:
- Sammeln von Flotationsschaum im Konzentratbehälter, wobei ein erster Teil des Flotationsschaums entgast wird und im Bereich des Behälterbodens eine flüssige Phase bildet, wobei ein zweiter Teil des Flotationsschaums eine darauf schwimmende Schaumphase ausbildet, wobei weiterhin der mindestens eine Schwimmkörper auf der flüssigen Phase aufschwimmt, wobei die Austrittsöffnungen im Bereich der Schaumphase angeordnet werden, während das Rührwerkzeug in der flüssigen Phase verbleibt;
- Zuführen einer Flüssigkeit, insbesondere in Form von Wasser, zur Schaumphase, wobei die Flüssigkeit über das Zulaufrohr zugeführt wird, die Rohrarme und die Rohrbögen durchströmt und über die Austrittsöffnungen in Richtung der Schaumphase austritt, wobei in Folge die rotierbare Einheit in Rotation um die Längsachse L des Zulaufrohrs versetzt wird;
- Entgasen des zweiten Teils des Flotationsschaums durch mechanische Zerstörung der Schaumphase einerseits mittels der in Rotation versetzten rotierbaren Einheit und andererseits die Zufuhr der Flüssigkeit zur Schaumphase; und
- Rühren der flüssigen Phase mittels des Rührwerkzeugs, das mit der rotierbaren Einheit mitbewegt wird.

Das erfindungsgemäße Verfahren ist mit besonders geringem Personaleinsatz durchführbar und benötigt für den Betreib des Rührwerkzeugs keine Fremdenergie, so dass es besonders kostengünstig durchgeführt werden kann. Aufgrund der selbsttätigen Regulierung der Position der Austrittsöffnungen über den mindestens einen Schwimmkörper ist weiterhin eine allzeit effektive Zerstörung der Schaumphase mittels der daraus austretenden Flüssigkeit gewährleistet, so dass das Verfahren besonders effektiv und mit hoher Ausbeute durchgeführt werden kann.

Die flüssige Phase wird bevorzugt mittels der mindestens einen Pumpeinrichtung, insbesondere Kreiselpumpe, aus dem Konzentratbehälter abgepumpt.

Die Flüssigkeit wird insbesondere mit einem Druck von mindestens 4 bar zugeführt, um die rotierbare Einheit in Rotation zu versetzen. Die rotierbare Einheit rotiert bevorzugt mit mindestens 50 Umdrehungen pro Minute.

Die Figuren 1 bis 3 sollen eine erfindungsgemäße Vorrichtung, eine damit ausgestattete Flotationsanlage sowie ein Verfahren zu deren Betrieb beispielhaft erläutern. So zeigt:
- FIG 1: einen Längsschnitt durch eine erfindungsgemäße Vorrichtung;
- FIG 2: eine Draufsicht auf die Vorrichtung gemäß Figur 1; und
- FIG 3: eine schematische Übersicht über eine Flotationsanlage umfassend eine Vorrichtung gemäß der Figuren 1 und 2.

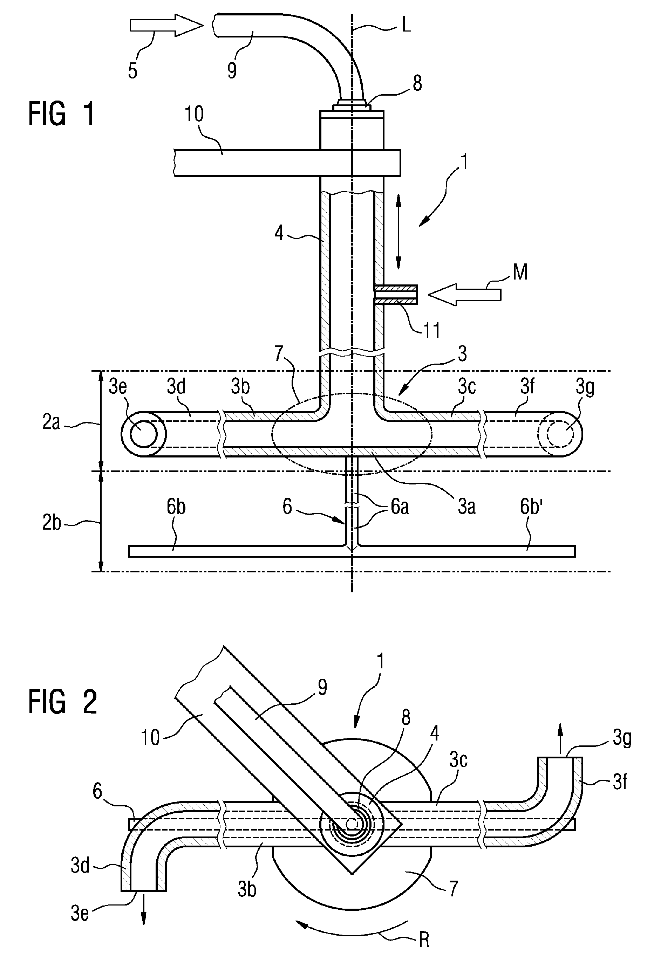

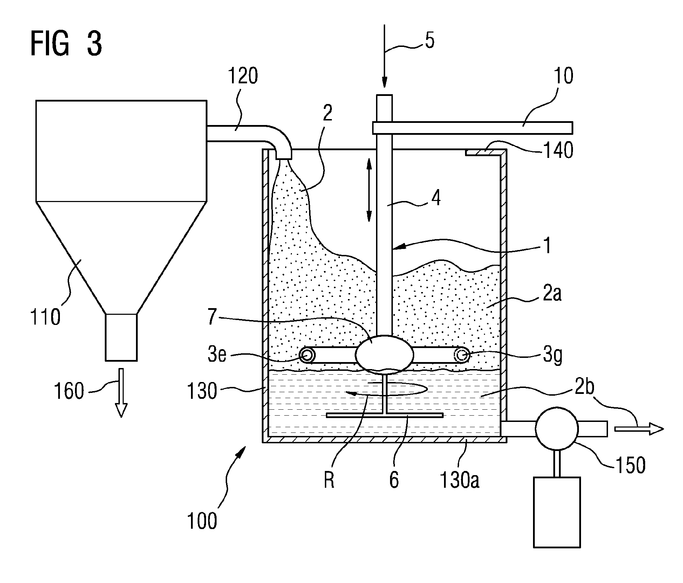

Die Figur 1 zeigt im Längsschnitt eine Vorrichtung 1 zur Entgasung von Flotationsschaum 2 (siehe auch Figur 3), umfassend eine rotierbare Einheit 3 und ein Zulaufrohr 4 für eine Flüssigkeit 5, insbesondere Wasser. Das Zulaufrohr 4 mündet an einem ersten Ende in die um eine Längsachse L des Zulaufrohrs 4 rotierbare Einheit 3. Die rotierbare Einheit 3 umfasst eine Rohrverzweigung 3a, die t-förmig ausgebildet ist und in zwei Rohrarme 3b, 3c mündet. An die Rohrarme 3b, 3c schließt sich jeweils ein Rohrbogen 3d, 3f mit einer Austrittsöffnung 3e, 3g für die Flüssigkeit 5 an. Die Austrittsöffnungen 3e, 3g befinden sich jeweils an einem dem jeweiligen Rohrarm 3b, 3c abgewandten Rohrbogenende des Rohrbogens 3d, 3f, wobei die Rohrbogenenden derart in entgegensetzte Richtungen zeigen (siehe Pfeile in FIG 2), dass beim Ausströmen der Flüssigkeit 5 aus den Austrittsöffnungen 3e, 3g auf die rotierbare Einheit 3 ein Drehmoment um die Längsachse L des Zulaufrohrs 4 wirkt. Dadurch wird die rotierbare Einheit 3 in Rotation R versetzt. Die Vorrichtung 1 umfasst weiterhin ein mit der rotierbaren Einheit 3 verbundenes Rührwerkzeug 6 und einen Schwimmkörper 7 in Form eines luftgefüllten Schlauchs. Die Rohrbögen 3d, 3f sind hier in einer senkrecht zur Längsachse L des Zulaufrohrs 4 ausgerichteten Ebene angeordnet. Weiterhin befinden sich auch die Rohrarme 3b, 3c in der senkrecht zur Längsachse L des Zulaufrohrs 4 ausgerichteten Ebene. Das Zulaufrohr 4 weist an einem dem ersten Ende abgewandten zweiten Ende eine Anschlusskupplung 8 zur Verbindung mit einer Flüssigkeitsversorgungseinheit 9, hier in Form eines Schlauchs, auf. Über die Flüssigkeitsversorgungseinheit 9 wird die Flüssigkeit 5 in das Zulaufrohr 4 unter Druck eingebracht. Der Schwimmkörper 7 ist konzentrisch zur Längsachse L des Zulaufrohrs 4 an der Rohrverzweigung 3a angeordnet.

Das Rührwerkzeug 6 weist einen Trägerstab 6a und mindestens zwei senkrecht zum Trägerstab 6a ausgerichtete Rührarme 6b, 6b' auf. Dabei ist der Trägerstab 6a konzentrisch zur Längsachse L des Zulaufrohrs 4 starr an der dem Zulaufrohr 4 abgewandten Ende der Rohrverzweigung 3a befestigt. Das Rührwerkzeug 6 weist in Richtung der Längsachse L des Zulaufrohrs 4 gesehen eine Breite auf, die maximal dem Durchmesser der rotierbaren Einheit 3 entspricht. Das Rührwerkzeug 6 kann weiterhin mit Rührschaufeln ausgestattet sein, die beispielsweise an den Rohrarmen 3b, 3c, den Rohrbögen 3d, 3f oder den Rührarmen 6b, 6b' angeordnet sind. Diese Rührschaufeln sind hier allerdings nicht im Detail dargestellt.

Weiterhin ist eine Halteeinrichtung 10 mit dem Zulaufrohr 4 verbunden, welche eine Bewegung des Zulaufrohrs 4 in Richtung der Längsachse L des Zulaufrohrs 4 ermöglicht. Weiterhin ist am Zulaufrohr 4 eine Düsenanordnung 11 zum Eindüsen eines flüssigen Mediums M in das Zulaufrohr 4 angeordnet. Bei dem flüssigen Medium M kann es sich beispielsweise um ein schaumbrechendes Reagenz handeln.

Figur 2 zeigt eine Draufsicht auf die Vorrichtung 1 gemäß Figur 1, wobei die Ausströmrichtungen (siehe Pfeile) der Flüssigkeit 5 aus den Austrittsöffnungen 3e, 3g sowie die resultierende Rotation R der rotierbaren Einheit 3 dargestellt sind. Im Übrigen kennzeichnen gleiche Bezugszeichen wie in FIG 1 oder 2 gleiche Elemente.

Figur 3 zeigt nun eine Flotationsanlage 100, umfassend eine Flotationszelle 110, eine Schaumaustragseinrichtung 120 zum Austragen des in der Flotationszelle 110 gebildeten Flotationsschaums 2 und einen Konzentratbehälter 130 zur Aufnahme und Entgasung des ausgetragenen Flotationsschaums 2. Hydrophile Partikel bzw. unerwünschte Stoffe ohne Wert werden über ein Abzugsrohr 160 aus der Flotationszelle 110 ausgetragen. Dem Konzentratbehälter 130 ist eine Vorrichtung 1 gemäß den Figuren 1 und 2 zugeordnet, deren Zulaufrohr 4 senkrecht in den Konzentratbehälter 130 eingeführt ist. Dabei zeigt das Rührwerkzeug 6 in Richtung eines Behälterbodens 130a des Konzentratbehälters 130. Aufgrund des Schwimmkörpers 7 der Vorrichtung 1 schwimmt diese auf einer flüssigen Phase 2b auf, die sich im unteren Bereich des Konzentratbehälters 130 bildet. So wird nach der Bildung des Flotationsschaums 2 in der Flotationszelle 110 dieser über die Schaumaustragseinrichtung 120 in den Konzentratbehälter 130 überführt, wobei ein erster Teil des Flotationsschaums 2 entgast wird und im Bereich des Behälterbodens 130a die flüssige Phase 2b bildet. Ein zweiter Teil des Flotationsschaums 2 bildet eine darauf schwimmende Schaumphase 2a aus. Auf der flüssigen Phase 2b schwimmt der Schwimmkörper 7 auf, wobei die Austrittsöffnungen 3e, 3g im Bereich der Schaumphase 2a angeordnet werden. Das Rührwerkzeug 6 verbleibt dagegen in der flüssigen Phase 2b. Wird nun eine Flüssigkeit 5 der Vorrichtung 1 zugeführt, insbesondere in Form von Wasser, tritt diese über die Austrittsöffnungen 3e, 3g in die Schaumphase 2a über. Aufgrund der Rückstosskräfte wird die rotierbare Einheit 3 in Rotation R um die Längsachse L des Zulaufrohrs 4 versetzt. Der zweite Teil des Flotationsschaums 2 wird durch mechanische Zerstörung der Schaumphase 2a entgast, wobei einerseits die Zerstörung mittels der in Rotation R versetzten rotierbaren Einheit 3 und andererseits durch die Zufuhr an Flüssigkeit 5 zur Schaumphase 2a erfolgt. Das sich mit der rotierbaren Einheit 3 mitbewegende Rührwerkzeug 6 rührt die flüssige Phase 2b und hält damit die enthaltenen Partikel in Schwebe, so dass flüssige Phase 2b mittels einer Pumpeinrichtung 150 aus dem Konzentratbehälter 130 abgepumpt werden kann. Die Flotationsanlage 100 umfasst weiterhin eine Sicherungseinrichtung 140, welche einen maximalen Bewegungsspielraum des Zulaufrohrs 4 in Richtung der Längsachse L des Zulaufrohrs 4 derart begrenzt, dass eine Kollision zwischen den Behälterboden 130a und dem Rührwerkszeug 6 vermieden wird.

Bei einer Änderung des Flüssigkeitsstands an flüssiger Phase 2b im Konzentratbehälter 130 verändert sich die Position der rotierbaren Einheit 3 aufgrund des auf der flüssigen Phase 2b schwimmenden Schwimmkörpers 7. So ist jederzeit eine optimale Anordnung der Austrittsöffnungen 2e, 3g innerhalb der Schaumphase 2a gewährleistet.

Dabei zeigen die Figuren 1 bis 3 lediglich Beispiele für die erfindungsgemäße Vorrichtung und die erfindungsgemäße Flotationsanlage. So kann die Anordnung der Rohrarme und der Rohrbögen von der gezeigten Anordnung abweichen. Auch die Ausgestaltung des Rührwerkzeugs ist in einfacher Weise veränderbar. Die Flotationsanlage kann weiterhin eine Mehrzahl an Flotationszellen, Schaumaustragseinrichtungen und Konzentratbehälter aufweisen, ohne dass der Erfindungsgedanke verlassen wird.

## Patentansprüche

1. Vorrichtung (1) zur Entgasung von Flotationsschaum (2), umfassend eine rotierbare Einheit (3) und ein Zulaufrohr (4) für eine Flüssigkeit (5), das an einem ersten Ende in die um eine Längsachse L des Zulaufrohrs (4) rotierbare Einheit (3) mündet, wobei die rotierbare Einheit (3) eine Rohrverzweigung (3a) umfasst, die t-förmig ausgebildet ist und in zwei Rohrarme (3b, 3c) mündet, wobei sich jeweils ein Rohrbogen (3d, 3f) mit einer Austrittsöffnung (3e, 3g) für die Flüssigkeit (5) an einen der Rohrarme (3b, 3c) anschließt, wobei sich die Austrittsöffnungen (3e, 3g) jeweils an einem dem jeweiligen Rohrarm (3b, 3c) abgewandten Rohrbogenende des Rohrbogens (3d, 3f) befinden, und wobei die Rohrbogenenden derart in entgegengesetzte Richtungen zeigen, dass beim Ausströmen der Flüssigkeit (5) aus den Austrittsöffnungen (3e, 3g) auf die rotierbare Einheit (3) ein Drehmoment um die Längsachse L des Zulaufrohrs (4) wirkt, und umfassend weiterhin ein mit der rotierbaren Einheit (3) verbundenes Rührwerkzeug (6) und mindestens einen Schwimmkörper (7).

2. Vorrichtung nach Anspruch 1,
wobei die Rohrbögen (3d, 3f) in einer senkrecht zur Längsachse L des Zulaufrohrs (4) ausgerichteten Ebene angeordnet sind.

3. Vorrichtung nach Anspruch 2,
wobei die Rohrarme (3b, 3c) ebenfalls in der senkrecht zur Längsachse L des Zulaufrohrs (4) ausgerichteten Ebene angeordnet sind.

4. Vorrichtung nach einem der Ansprüche 1 bis 3,
wobei das Zulaufrohr (4) an einem dem ersten Ende abgewandten zweiten Ende eine Anschlusskupplung (8) zur Verbindung mit einer Flüssigkeitsversorgungseinheit (9) aufweist.

5. Vorrichtung nach einem der Ansprüche 1 bis 4,
wobei der mindestens eine Schwimmkörper (7) konzentrisch zur Längsachse L des Zulaufrohrs (4) an der Rohrverzweigung (3a) oder dem Zulaufrohr (4) angeordnet ist.

6. Vorrichtung nach einem der Ansprüche 1 bis 5,
wobei das Rührwerkzeug (6) t-förmig ausgebildet ist.

7. Vorrichtung nach Anspruch 6,
wobei das Rührwerkzeug (6) einen Trägerstab (6a) und mindestens zwei senkrecht zum Trägerstab (6a) ausgerichtete Rührarme (6b, 6b') aufweist, wobei der Trägerstab (6a) konzentrisch zur Längsachse L des Zulaufrohrs (4) starr an der, dem Zulaufrohr (4) abgewandten Seite der Rohrverzweigung (3a) befestigt ist.

8. Vorrichtung nach einem der Ansprüche 1 bis 7,
wobei das Rührwerkzeug (6) in Richtung der Längsachse L des Zulaufrohrs (4) gesehen eine maximale Breite aufweist, die maximal dem Durchmesser der rotierbaren Einheit (3) entspricht.

9. Vorrichtung nach einem der Ansprüche 1 bis 8,
wobei das Rührwerkzeug (6) mindestens zwei Rührschaufeln umfasst, die an den Rohrarmen (3b, 3c) und/oder den Rohrbögen (3d, 3f) und/oder den Rührarmen (6b, 6b') angeordnet sind.

10. Vorrichtung nach einem der Ansprüche 1 bis 9,
wobei eine Halteeinrichtung (10) mit dem Zulaufrohr (4) verbunden ist, welche eine Bewegung des Zulaufrohrs (4) in Richtung der Längsachse L des Zulaufrohrs (4) ermöglicht.

11. Vorrichtung nach einem der Ansprüche 1 bis 9,
wobei am Zulaufrohr (4) mindestens eine Düsenanordnung (11) zum Eindüsen mindestens eines flüssigen und/oder gasförmigen Mediums M in das Zulaufrohr (4) angeordnet ist.

12. Flotationsanlage (100), umfassend mindestens eine Flotationszelle (110), mindestens eine Schaumaustragseinrichtung (120) zum Austragen eines in der jeweiligen Flotationszelle (110) gebildeten Flotationsschaums (2) und mindestens einen Konzentratbehälter (130) zur Aufnahme und Entgasung des ausgetragenen Flotationsschaums (2), wobei weiterhin jedem Konzentratbehälter (130) eine Vorrichtung (1) nach einem der Ansprüche 1 bis 11 zugeordnet ist, deren Zulaufrohr (4) senkrecht in den Konzentratbehälter (130) eingeführt ist, wobei das Rührwerkzeug (6) in Richtung eines Behälterbodens (130a) des Konzentratbehälters (130) zeigt.

13. Flotationsanlage nach Anspruch 12,
wobei eine Sicherungseinrichtung (140) vorhanden ist, welche einen maximalen Bewegungsspielraum des Zulaufrohrs (4) in Richtung der Längsachse L des Zulaufrohrs (4) derart begrenzt, dass eine Kollision zwischen dem Behälterboden (130a) und dem Rührwerkzeug (6) vermieden wird.

14. Flotationsanlage nach Anspruch 12 oder Anspruch 13,
wobei einem jeden Konzentratbehälter (130) mindestens eine Pumpeinrichtung (150) zugeordnet ist, mittels welcher eine flüssige Phase (2b) aus dem Konzentratbehälter (130) abpumpbar ist.

15. Verfahren zum Entgasen von Flotationsschaum (2) mittels einer Flotationsanlage (100) nach einem der Ansprüche 12 bis 14, mit folgenden Schritten:
- Sammeln von Flotationsschaum (2) im Konzentratbehälter (130), wobei ein erster Teil des Flotationsschaums (2) entgast wird und im Bereich des Behälterbodens (130a) eine flüssige Phase (2b) bildet, wobei ein zweiter Teil des Flotationsschaums (2) eine darauf schwimmende Schaumphase (2a) ausbildet, wobei weiterhin der mindestens eine Schwimmkörper (7) auf der flüssigen Phase (2a) aufschwimmt, wobei die Austrittsöffnungen (3e, 3g) im Bereich der Schaumphase (2a) angeordnet werden, während das Rührwerkzeug (6) in der flüssigen Phase (2b) verbleibt;
- Zuführen einer Flüssigkeit (5), insbesondere in Form von Wasser, zur Schaumphase (2a), wobei die Flüssigkeit (5) über das Zulaufrohr (4) zugeführt wird, die Rohrarme (3b, 3c) und die Rohrbögen (3d, 3f) durchströmt und über die Austrittsöffnungen (3e, 3g) in Richtung der Schaumphase (2a) austritt, wobei in Folge die rotierbare Einheit (3) in Rotation um die Längsachse L des Zulaufrohrs (4) versetzt wird;
- Entgasen des zweiten Teils des Flotationsschaums (2) durch mechanische Zerstörung der Schaumphase (2a) einerseits mittels der in Rotation versetzten rotierbaren Einheit (3) und andererseits die Zufuhr der Flüssigkeit (5) zur Schaumphase (2a); und
- Rühren der flüssigen Phase (2b) mittels des Rührwerkzeugs (6), das mit der rotierbaren Einheit (3) mitbewegt wird.

16. Verfahren nach Anspruch 15,
wobei die flüssige Phase (2b) mittels der mindestens einen Pumpeinrichtung (150) aus dem Konzentratbehälter (130) abgepumpt wird.

17. Verfahren nach Anspruch 15 oder Anspruch 16,
wobei die Flüssigkeit (5) mit einem Druck von mindestens 4 bar zugeführt wird.

18. Verfahren nach einem der Ansprüche 15 bis 17,
wobei die rotierbare Einheit (3) mit mindestens 50 Umdrehungen pro Minute rotiert.
